# EUROPÄISCHE PATENTSCHRIFT

(11) **EP 1 339 243 B1**
(45) Veröffentlichungstag und Bekanntmachung des Hinweises auf die Patenterteilung: **30.07.2014**
(21) Anmeldenummer: 03100215.7
(22) Anmeldetag: 03.02.2003
(51) Int. Cl.: H04Q 3/00, H04Q 3/62

(54) **Verfahren und Netzübergangseinrichtung zum netzübergreifenden Verbindungsaufbau**
Method and network gateway for inter-network connection setup
Méthode et passerelle de réseau pour l'établissement de connexion inter-réseau

(30) Priorität: 25.02.2002 DE 10207976
(43) Veröffentlichungstag der Anmeldung: 27.08.2003
(73) Patentinhaber: Unify GmbH & Co. KG, 81379 München (DE)
(72) Erfinder: Pellert, Martin, 81477, München (DE); Stöckl, Werner, 82065, Baierbrunn (DE)
(74) Vertreter: Fritzsche, Thomas

(56) Entgegenhaltungen:
- EP-A- 1 069 742
- WO-A-02/089445

## Beschreibung

In zeitgemäßen Kommunikationssystemen sind Verbindungen, z.B. zur Sprach-, Video- und/oder Multimediakommunikation in vielen Fällen über mehrere als Transitnetze fungierende Kommunikationsnetze, wie z.B. lokale Netze (LAN) oder Weitverkehrsnetze (WAN) hinweg aufzubauen. Dabei wird häufig in einem jeweiligen Transitnetz ein anderes Verbindungsaufbauprotokoll verwendet, als in den Kommunikationsnetzen in denen sich Anfangs- oder Endpunkte einer Verbindung befinden.

Ein typischer Anwendungsfall ist beispielsweise ein Aufbau einer Schmalband-Nutzdatenverbindung, z.B. zur Echtzeit-Sprachkommunikation, über ein Breitbandnetz als Transitnetz. Zum Aufbau einer derartigen Schmalband-Nutzdatenverbindung ist eine Schmalbandsignalisierung gemäß einem Schmalband-Verbindungsaufbauprotokoll zwischen den Endpunkten der Verbindung zu übermitteln. Zur Verbindungsführung über das Breitbandnetz ist weiterhin eine Breitband-Nutzdatenverbindung über das Breitbandnetz mittels einer Breitband-Verbindungsaufbausignalisierung aufzubauen.

Gemäß dem bisherigen Stand der Technik wird eine solche Breitband-Nutzdatenverbindung vor dem Eintritt einer Schmalband-Verbindungsaufbaumeldung in das Breitbandnetz vollständig aufgebaut, um nach Bestätigung des Breitbandverbindungsaufbaus die Schmalband-Verbindungsaufbaumeldung über das Breitbandnetz in das Zielnetz zu übermitteln und so den Schmalband-Verbindungsaufbau fortzusetzen. Dieses Verfahren stellt sicher, dass die Breitband-Nutzdatenverbindung aufgebaut ist, wenn sie für die Übertragung der Schmalbandnutzdaten im Rahmen der Schmalband-Nutzdatenverbindung benötigt wird.

In der nicht vorveröffentlichten internationalen Patentanmeldung WO 02/089445 A1, die nur Stand der Technik nach Artikel 54(3) und (4) EPÜ bildet, ist ein Verfahren zum Synchronisieren des Verbindungsaufbaus zwischen Telefonnetzen und VoIP-Netzen über Media-Gateways beschrieben, bei dem ein "Continuity-Test" einer Verbindung durchgeführt und die Verbindungsaufbaumeldungen entsprechend verzögert werden. Das Messen von Verbindungsaufbauzeiten und das Nutzen von vorher ermittelten Verzögerungszeiten ist nicht vorgesehen.

Die für den Aufbau der Schmalband-Nutzdatenverbindung zwischen den Verbindungsendpunkten benötigte Zeitdauer ergibt sich hierbei aus der Summe der Aufbauzeiten einer reinen Schmalband- und einer reinen Breitband-Nutzdatenverbindung. Gegenüber einer reinen Schmalband-Nutzdatenverbindung kann sich somit die Aufbauzeit einer über ein Transitnetz mit unterschiedlichem Verbindungsaufbauprotokoll führenden Verbindung erheblich verlängern. Diese Verlängerung kann sich insbesondere bei über mehrere oder eine Vielzahl von Transitnetzen führenden Verbindungen zu beträchtlichen Verzögerungen aufsummieren.

Es ist Aufgabe der vorliegenden Erfindung ein Verfahren zum Aufbau einer netzübergreifenden Verbindung mittels einer netzübergreifend zu übertragenden Verbindungsaufbaumeldung anzugeben, das einen gegenüber dem Stand der Technik schnelleren Verbindungsaufbau über ein Transitnetz mit einem transitnetzspezifischen Verbindungsaufbauprotokoll erlaubt. Es ist weiterhin Aufgabe der Erfindung eine Netzübergangseinrichtung zur Realisierung des Verfahrens anzugeben.

Gelöst wird diese Aufgabe durch ein Verfahren mit den Merkmalen des Patentanspruchs 1, sowie durch eine Netzübergangseinrichtung mit den Merkmalen des Patentanspruchs 6.

Zum Aufbau einer netzübergreifenden Verbindung ist eine Verbindungsaufbaumeldung netzübergreifend zu übertragen. Erfindungsgemäss wird durch Eintreffen der Verbindungsaufbaumeldung an einer Eintrittsstelle in ein Transitnetz ein Aufbau einer Transitnetzverbindung über das Transitnetz initiiert, während die Verbindungsaufbaumeldung an der Eintrittsstelle vor ihrer Weiterleitung über das Transitnetz um eine voreingestellte Verzögerungszeit verzögert wird. Die Verzögerungszeit ist dabei derart bemessen, dass der Aufbau der Transitnetzverbindung im Wesentlichen abgeschlossen ist, wenn diese zur Verbindungsführung der durch die weitergeleitete Verbindungsaufbaumeldung initiierten, netzübergreifenden Verbindung benötigt wird.

Zur Realisierung des Verfahrens kann an der Eintrittsstelle in das Transitnetz eine erfindungsgemäße Netzübergangseinrichtung, wie z.B. eine Brücke, ein Gateway, ein Router, oder eine sogenannte Interworking-Unit angeordnet sein. Die erfindungsgemäße Netzübergangseinrichtung weist Empfangsmittel zum Empfangen der über das Transitnetz weiterzuleitenden Verbindungsaufbaumeldung sowie eine transitnetzseitige Verbindungssteuerung zum durch Empfang der Verbindungsaufbaumeldung initiierten Aufbau einer Transitnetzverbindung über das Transitnetz auf. Die Netzübergangseinrichtung verfügt ferner über einen Speicher zum Zwischenspeichern der empfangenen Verbindungsaufbaumeldung sowie über einen Zeitgeber zum Verzögern der Weiterleitung der zwischengespeicherten Verbindungsaufbaumeldung um die voreingestellte Verzögerungszeit.

Ein wesentlicher Vorteil der Erfindung besteht darin, dass der Aufbau der netzübergreifenden Verbindung gegenüber dem Stand der Technik beträchtlich beschleunigt wird. Dies wird im Wesentlichen dadurch erreicht, dass vor der Weiterleitung der Verbindungsaufbaumeldung über das Transitnetz nicht erst der vollständige Aufbau der Transitnetzverbindung sondern nur der Ablauf einer voreingestellten Verzögerungszeit abgewartet wird. Die Verbindungsaufbaumeldung wird in der Regel schon weitergeleitet, während die Transitnetzverbindung noch aufgebaut wird. Auf diese Weise werden der Aufbau der netzübergreifenden Verbindung und der Aufbau der Transitnetzverbindung zumindest teilweise zeitlich parallelisiert.

Ein weiterer Vorteil der Erfindung ist darin zu sehen, dass zu deren Realisierung nur geringe Änderungen an bestehenden Kommunikationssystemen und insbesondere nur ein geringer Eingriff in eine Verbindungssignalisierung erforderlich sind. An Endpunkten der aufzubauenden netzübergreifenden Verbindung sind keinerlei Änderungen notwendig.

Vorteilhafte Ausführungsformen und Weiterbildungen der Erfindung sind in den abhängigen Ansprüchen angegeben.

Gemäß einer vorteilhaften Ausführungsform der Erfindung kann die Verbindungsaufbaumeldung über eine im Transitnetz aufgebaute Signalisierungstunnelverbindung weitergeleitet werden. Die Signalisierungstunnelverbindung kann dabei vorab, z.B. als Festverbindung aufgebaut werden. Vorzugsweise können mehrere derartige Signalisierungstunnelverbindungen zwischen mehreren oder allen potentiellen Eintritts- und Austrittsstellen in das bzw. aus dem Transitnetz vorab aufgebaut werden. Über eine bereits aufgebaute Signalisierungstunnelverbindung kann die Verbindungsaufbaumeldung sehr schnell über das Transitnetz weitergeleitet werden. Im Unterschied zu Nutzdatenverbindungen zur Echtzeitkommunikation können Signalisierungstunnelverbindungen in vielen Kommunikationsnetzen sehr kostengünstig als permanente Festverbindungen eingerichtet werden.

Nach der Erfindung kann eine jeweilige Aufbauzeit einer netzübergreifenden Verbindung und einer Transitnetzverbindung gemessen werden, um anschließend die Verzögerungszeit für eine nachfolgende Verbindungsaufbaumeldung abhängig von einem Vergleich der gemessenen Aufbauzeiten einzustellen. Die Verzögerungszeit kann vorzugsweise so eingestellt werden, dass die netzübergreifende Verbindung möglichst kurz nach Aufbau der Transitnetzverbindung über diese geführt wird, um so eine möglichst geringe Leerlaufzeit zu erzielen. Durch eine fortlaufende Messung der genannten Aufbauzeiten im laufenden Betrieb kann die Verzögerungszeit fortwährend nachjustiert und so optimal an aktuell herrschende Netzbedingungen angepasst werden. Beim erstmaligen Aufbau einer netzübergreifenden Verbindung kann in Ermangelung von Messwerten für vorangegangene Verbindungsaufbauzeiten ein ausreichend bemessener Vorgabewert für die Verzögerungszeit administrativ vorgegeben werden. Alternativ dazu kann beim ersten netzübergreifenden Verbindungsaufbau vor dem Weiterleiten der Verbindungsaufbaumeldung erst der Aufbau der Transitnetzverbindung abgewartet werden.

Die Verbindungsaufbaumeldung kann während ihrer Verzögerung durch eine an der Eintrittsstelle angeordnete Netzübergangseinrichtung zwischengespeichert werden. Vorzugsweise kann die Netzübergangseinrichtung während die Verbindungsaufbaumeldung verzögert wird, anhand einer in dieser enthaltenen, verbindungsspezifischen Information eine oder mehrere verbindungsspezifische Einstellungen vornehmen. Auf diese Weise können beispielsweise Hardware- und/oder Softwareeinstellungen vorgenommen werden, die Übertragungs-, Verbindungs- und/oder Dienstgüteparameter betreffen. Gegebenenfalls kann die Verbindungsaufbaumeldung dabei abhängig vom Abschluss oder vom Verlauf einer derartigen Einstellung zusätzlich verzögert werden.

Nach einer weiteren Ausgestaltung der Erfindung kann als netzübergreifende Verbindung eine Schmalbandverbindung mittels einer Schmalband-Verbindungsaufbaumeldung über ein Breitbandnetz als Transitnetz aufgebaut werden.

Ein Ausführungsbeispiel der Erfindung wird nachfolgend anhand der Zeichnung näher erläutert.

Dabei zeigen jeweils in schematischer Darstellung:
Fig. 1 ein Kommunikationssystem mit drei gekoppelten Kommunikationsnetzen beim Aufbau einer netzübergreifenden Verbindung,
Fig. 2 eine erfindungsgemäße Netzübergangseinrichtung und
Fig. 3 ein Ablaufdiagramm zur Veranschaulichung des Signalisierungsverkehrs beim Aufbau der netzübergreifenden Verbindung.

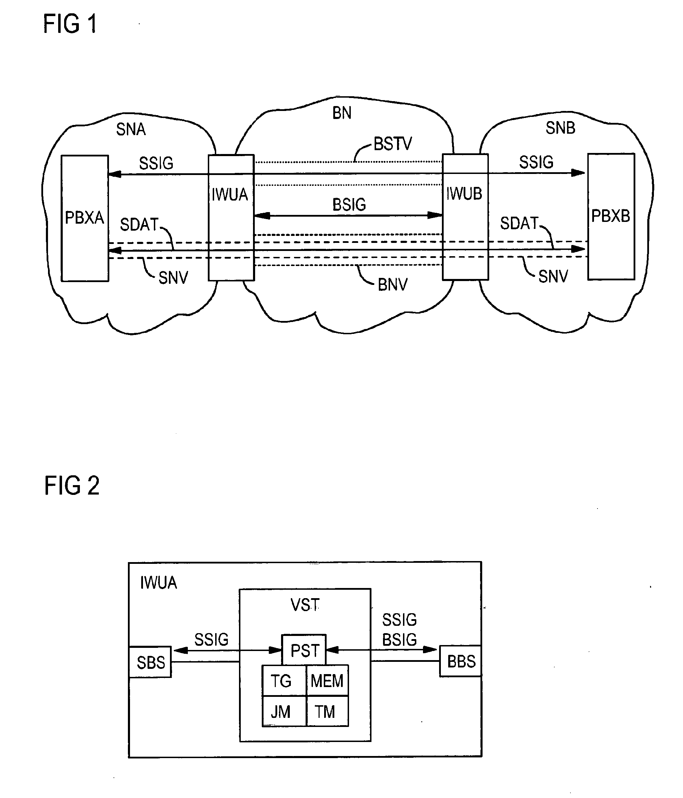

In Figur 1 ist ein Kommunikationssystem mit zwei, beispielsweise zur Echtzeit-Sprachkommunikation vorgesehenen Schmalbandnetzen SNA und SNB schematisch dargestellt, die über ein Breitbandnetz BN als Transitnetz gekoppelt sind. Das Breitbandnetz BN kann dabei z.B. ein lokales Netz (LAN), ein Weitverkehrsnetz (WAN), das Internet, ein sogenanntes Backbone-Netz oder ein ATM-Netz (ATM: Asynchronous Transfer Mode) sein. Die Schmalbandnetze SNA und SNB können jeweils durch ein leitungsvermitteltes oder ein paketorientiertes Kommunikationsnetz realisiert sein, wobei letzteres einen Aufbau von gegebenenfalls virtuellen Verbindungen, z.B. gemäß ATM-Protokoll, MPLS-Protokoll (MPLS: Multi Protocol Label Switching) oder gemäß der ITU-T-Empfehlung H.323, erlauben soll. Unter einem Verbindungsaufbau sei dabei allgemein ein Einrichten eines beliebigen Datenstroms verstanden.

Zum Aufbau von Nutzdatenverbindungen sind im Breitbandnetz BN ein Breitband-Verbindungsaufbauprotokoll und in den Schmalbandnetzen SNA und SNB jeweils ein Schmalband-Verbindungsaufbauprotokoll vorgesehen.

Es sei an dieser Stelle angemerkt, dass die Anwendung der Erfindung nicht auf die im Ausführungsbeispiel angegebene Kombination von Breitband- und Schmalbandnetzen beschränkt ist. Die Erfindung lässt sich vielmehr auf beliebige Kombinationen von verschiedene Verbindungsaufbauprotokolle aufweisenden Kommunikationsnetzen anwenden.

Das Breitbandnetz BN ist über eine Netzübergangseinrichtung IWUA an das Schmalbandnetz SNA und über eine Netzübergangseinrichtung IWUB an das Schmalbandnetz SNB gekoppelt. Die Netzübergangseinrichtungen IWUA und IWUB können hierbei z.B. jeweils durch eine Gateway-Einrichtung, eine sogenannte Interworking-Unit, eine Brücke oder eine Routereinrichtung realisiert sein. Im Schmalbandnetz SNA befindet sich eine Vermittlungseinrichtung PBXA von der aus im vorliegenden Ausführungsbeispiel eine netzübergreifende Schmalband-Nutzdatenverbindung SNV zu einer im Schmalbandnetz SNB befindlichen Vermittlungseinrichtung PBXB aufzubauen ist. Die aufzubauende Verbindung verläuft dabei aus dem Schmalbandnetz SNA über die Netzübergangseinrichtung IWUA als Eintrittsstelle in das Breitbandnetz BN und die Netzübergangseinrichtung IWUB als Austrittsstelle aus dem Breitbandnetz BN in das Schmalbandnetz SNB. Die Vermittlungseinrichtungen PBXA und PBXB können jeweils z.B. durch eine Nebenstellenanlage oder einen Netzknoten des Schmalbandnetzes SNA bzw. SNB realisiert sein. Alternativ dazu kann anstelle einer jeweiligen Vermittlungseinrichtung PBXA oder PBXB z.B. eine Kommunikationsendeinrichtung, ein Personalcomputer, eine Client-Anwendung oder ein Kommunikationsserver eingesetzt sein.

Der Aufbau der Schmalband-Nutzdatenverbindung SNV wird durch eine Schmalbandsignalisierung SSIG zwischen den Vermittlungseinrichtungen PBXA und PBXB im Rahmen des Schmalband-Verbindungsaufbauprotokolls initiiert. Die Schmalbandsignalisierung SSIG wird innerhalb einer zwischen den Netzübergangseinrichtungen IWUA und IWUB aufgebauten Breitband-Signalisierungstunnelverbindung BSTV über das Breitbandnetz BN übertragen. Die Breitband-Signalisierungstunnelverbindung BSTV ist in Figur 1 durch punktierte Linien angedeutet. Die Breitband-Signalisierungstunnelverbindung BSTV kann vorzugsweise vorab als Signalisierungs-Festverbindung zwischen den Netzübergangseinrichtungen IWUA und IWUB, z.B. als sog. AAL5-Verbindung (AAL: ATM Adaption Layer) aufgebaut werden. Das Einrichten einer Signalisierungs-Festverbindung ist in der Regel wesentlich kostengünstiger als ein Einrichten einer Nutzdaten-Festverbindung. Häufig ist sogar ein Einrichten von Signalisierungs-Festverbindungen zwischen mehreren oder allen an ein Breitbandnetz angekoppelten Netzübergangseinrichtungen hinsichtlich der anfallenden Kosten akzeptabel. Die Einrichtung einer solchen Signalisierungs-Festverbindung, hier BSTV, ist insofern vorteilhaft, als die Schmalbandsignalisierung SSIG sehr schnell über das Breitbandnetz BN übertragen werden kann.

Durch die Schmalbandsignalisierung SSIG werden die Netzübergangseinrichtungen IWUA und IWUB dazu veranlasst, zwischen ihnen eine Breitband-Nutzdatenverbindung BNV, z.B. eine sog. AAL1-Verbindung aufzubauen. Der Aufbau der Breitband-Nutzdatenverbindung BNV erfolgt mittels einer Breitbandsignalisierung BSIG im Rahmen des Breitband-Verbindungsaufbauprotokolls. In Figur 1 ist die Breitband-Nutzdatenverbindung BNV durch eng strichlierte Linien angedeutet.

Über die zwischen den Netzübergangseinrichtungen IWUA und IWUB aufgebaute Breitband-Nutzdatenverbindung BNV wird die zwischen den Vermittlungseinrichtungen PBXA und PBXB aufzubauende Schmalband-Nutzdatenverbindung SNV über das Breitbandnetz BN geführt. Durch das erfindungsgemäße Verfahren wird mit hoher Wahrscheinlichkeit gewährleistet, dass der Aufbau der Breitband-Nutzdatenverbindung BNV im Wesentlichen abgeschlossen ist, wenn diese zur Verbindungsführung der durch die Schmalbandsignalisierung SSIG initiierten Schmalband-Nutzdatenverbindung SNV benötigt wird. Nach Aufbau der Schmalband-Nutzdatenverbindung SNV werden schließlich Schmalband-Nutzdaten SDAT innerhalb der Schmalband-Nutzdatenverbindung SNV transparent zwischen den Vermittlungseinrichtungen PBXA und PBXB übertragen. Die Schmalband-Nutzdatenverbindung SNV ist in Figur 1 mittels strichlierter Linien angedeutet.

In Figur 2 ist die erfindungsgemäße Netzübergangseinrichtung IWUA schematisch dargestellt. Die Netzübergangseinrichtung IWUA verfügt über eine Breitbandschnittstelle BBS zum Anschluss des Breitbandnetzes BN sowie über eine Schmalbandschnittstelle SBS zum Anschluss des Schmalbandnetzes SNA. Weiterhin weist die Netzübergangseinrichtung IWUA eine an die Schnittstellen BBS und SBS gekoppelte Verbindungssteuerung VST auf. Die Verbindungssteuerung VST umfasst eine Protokollsteuerung PST zur Verarbeitung sowohl des Schmalband- als auch des Breitband-Verbindungsaufbauprotokolls, einen Speicher MEM zum Speichern von Signalisierungsmeldungen, einen Zeitgeber TG zum Verzögern von Signalisierungsmeldungen um eine voreingestellte Verzögerungszeit TD, eine Zeitmesseinrichtung TM sowie Justiermittel JM zum Einstellen der Verzögerungszeit. Der Speicher MEM, der Zeitgeber TG, die Zeitmesseinrichtung TM und die Justiermittel JM sind mit der Protokollsteuerung PST gekoppelt.

Die Protokollsteuerung PST tauscht die Breitbandsignalisierung BSIG sowie die innerhalb der Breitband-Signalisierungstunnelverbindung BSTV übertragene Schmalbandsignalisierung SSIG über die Breitbandschnittstelle BBS mit dem Breitbandnetz BN aus. Über die Schmalbandschnittstelle SBS tauscht die Protokollsteuerung PST ferner die Schmalbandsignalisierung SSIG mit dem Schmalbandnetz SNA aus.

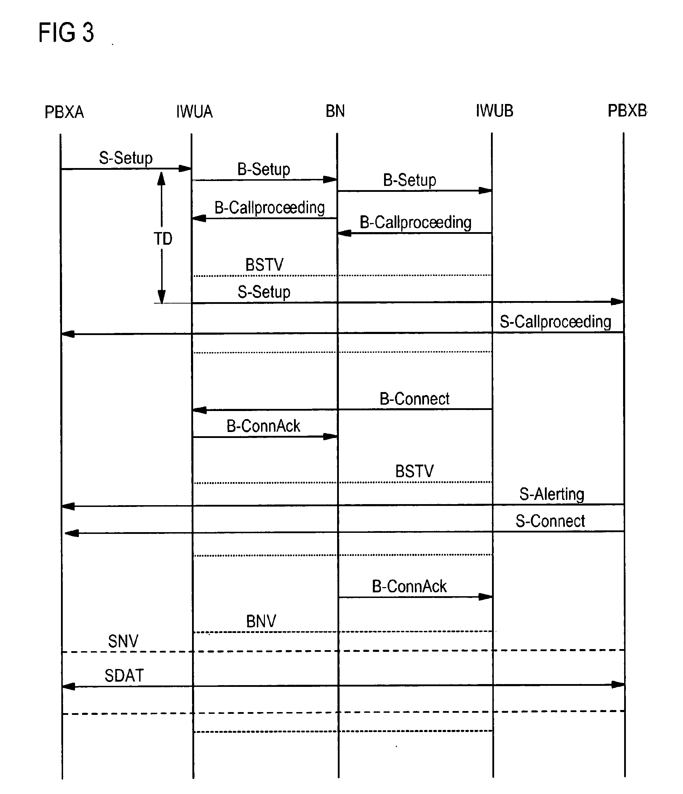

Figur 3 zeigt ein Ablaufdiagramm zur Veranschaulichung des Signalisierungsverkehrs zwischen den Vermittlungseinrichtungen PBXA und PBXB sowie den Netzübergangseinrichtungen IWUA und IWUB zum Aufbau der Schmalband-Nutzdatenverbindung SNV. Die Zeitachse verläuft in Figur 3 von oben nach unten.

Im vorliegenden Ausführungsbeispiel initiiert die Vermittlungseinrichtung PBXA den Aufbau der Schmalband-Nutzdatenverbindung SNV durch Übermitteln einer Schmalband-Verbindungsaufbaumeldung S-Setup zur Netzübergangseinrichtung IWUA im Rahmen der Schmalbandsignalisierung SSIG. Die Netzübergangseinrichtung IWUA empfängt die Schmalband-Verbindungsaufbaumeldung S-Setup über die Schmalbandschnittstelle SBS und führt sie der Protokollsteuerung PST zu.

Durch den Empfang der Schmalband-Verbindungsaufbaumeldung S-Setup wird die Verbindungssteuerung VST zur unverzüglichen Übermittlung einer für das Breitbandnetz BN spezifischen Breitband-Verbindungsaufbaumeldung B-Setup zum Aufbau der Breitband-Nutzdatenverbindung BNV veranlasst. Die Breitband-Verbindungsaufbaumeldung B-Setup wird im Rahmen der Breitbandsignalisierung BSIG über die Breitbandschnittstelle BBS in das Breitbandnetz BN übertragen.

Die empfangene Schmalband-Verbindungsaufbaumeldung S-Setup wird durch die Netzübergangseinrichtung IWUA zunächst nicht weitergeleitet, sondern im Speicher MEM zwischengespeichert. Mittels des Zeitgebers TG wird die Weiterleitung der zwischengespeicherten Schmalband-Verbindungsaufbaumeldung S-Setup um die voreingestellte Verzögerungszeit TD - gemessen ab Empfang der Schmalband-Verbindungsaufbaumeldung S-Setup - verzögert.

Die Verzögerungszeit TD ist derart bemessen, dass der Aufbau der Breitband-Nutzdatenverbindung BNV im Wesentlichen abgeschlossen ist, wenn diese zur Verbindungsführung der Schmalband-Nutzdatenverbindung SNV benötigt wird. Vorzugsweise können die Aufbauzeiten vorangegangener Schmalband- und Breitband-Nutzdatenverbindungen mittels der Zeitmesseinrichtung TM gemessen werden, um anschliessend die Verzögerungszeit TD für eine nachfolgende Schmalband-Verbindungsaufbaumeldung abhängig von einem Vergleich der gemessenen Aufbauzeiten durch die Justiermittel JM einzustellen. Die Verzögerungszeit TD kann vorteilhafterweise so eingestellt werden, dass die Schmalband-Nutzdatenverbindung SNV möglichst kurz nach Aufbau der Breitband-Nutzdatenverbindung BNV über diese geführt wird, um so eine möglichst geringe Leerlaufzeit zu erzielen. Durch eine fortlaufende Messung der genannten Aufbauzeiten im laufenden Betrieb kann die Verzögerungszeit TD durch die Justiermittel JM fortwährend nachjustiert und so optimal an aktuell herrschende Netzbedingungen angepasst werden.

Darüber hinaus kann die Weiterleitung der Schmalband-Verbindungsaufbaumeldung S-Setup abhängig vom Verlauf oder vom Abschluss verbindungsspezifischer Einstellungen verzögert werden, die anhand einer in der Schmalband-Verbindungsaufbaumeldung S-Setup enthaltenen, verbindungsspezifischen Information durch die Verbindungssteuerung VST vorgenommen werden.

Weiterhin kann die Verzögerungszeit TD auch abhängig von im Rahmen des Aufbaus der Breitband-Nutzdatenverbindung BNV eintreffenden bzw. abgehenden Meldungen, wie z.B. Breitband-Rufbearbeitungsmeldungen (Callproceeding) oder Rufeinleitungsmeldungen (Connect, ConnAck), eingestellt werden.

Während die Schmalband-Verbindungsaufbaumeldung S-Setup in der Netzübergangseinrichtung IWUA verzögert wird, wird die Breitband-Verbindungsaufbaumeldung B-Setup über das Breitbandnetz BN zur Netzübergangseinrichtung IWUB übertragen. Als Reaktion auf die Übertragung der Breitband-Verbindungsaufbaumeldung B-Setup wird aus dem Breitbandnetz BN eine Breitband-Rufbearbeitungsmeldung B-Callproceeding zur Netzübergangseinrichtung IWUA übermittelt. Analog dazu sendet die Netzübergangseinrichtung IWUB als Reaktion auf das Eintreffen der Breitband-Verbindungsaufbaumeldung B-Setup ihrerseits eine Breitband-Rufbearbeitungsmeldung B-Callproceeding in das Breitbandnetz BN.

Nach Ablauf der Verzögerungszeit TD wird die Schmalband-Verbindungsaufbaumeldung S-Setup aus dem Speicher MEM ausgelesen und über die Breitbandschnittstelle BBS innerhalb der vorab aufgebauten Breitband-Signalisierungstunnelverbindung

BSTV über das Breitbandnetz BN zur Netzübergangseinrichtung IWUB weitergeleitet. Die Netzübergangseinrichtung IWUB überträgt die Schmalband-Verbindungsaufbaumeldung S-Setup dann unverzüglich zum Verbindungsziel PBXB.

Durch die Übertragung der Schmalband-Verbindungsaufbaumeldung S-Setup zum Verbindungsziel PBXB wird der Aufbau der Schmalband-Nutzdatenverbindung SNV fortgesetzt. Als Reaktion auf den Empfang der Schmalband-Verbindungsaufbaumeldung S-Setup sendet die Vermittlungseinrichtung PBXB zunächst eine Schmalband-Rufbearbeitungsmeldung S-Callproceeding über die Breitband-Signalisierungstunnelverbindung BSTV zur Vermittlungseinrichtung PBXA.

Parallel dazu wird durch die Netzübergangseinrichtung IWUB als Reaktion auf den Empfang der Breitband-Verbindungsaufbaumeldung B-Setup eine Breitband-Verbindungseinleitungsmeldung B-Connect über das Breitbandnetz BN zur Netzübergangseinrichtung IWUA übertragen. Die Netzübergangseinrichtung IWUA bestätigt daraufhin den Empfang der Breitband-Verbindungseinleitungsmeldung B-Connect durch Übertragung einer Breitband-Einleitungsbestätigungsmeldung B-ConnAck in das Breitbandnetz BN.

Während die Breitband-Einleitungsbestätigungsmeldung B-ConnAck vom Breitbandnetz BN weiter zur Netzübergangseinrichtung IWUB übermittelt wird, sendet die Vermittlungseinrichtung PBXB im Rahmen des durch die weitergeleitete Schmalband-Verbindungsaufbaumeldung S-Setup initiierten Schmalband-Verbindungsaufbaus weiterhin eine Schmalband-Rufmeldung S-Alerting sowie eine Schmalband-Verbindungseinleitungsmeldung S-Connect über die Breitband-Signalisierungstunnelverbindung BSTV zur Vermittlungseinrichtung PBXA. Die Schmalband-Nutzdatenverbindung SNV und die Breitband-Nutzdatenverbindung BNV werden somit zeitlich weitgehend parallel aufgebaut.

Nach der Übermittlung der Breitband-Einleitungsbestätigungsmeldung B-ConnAck zur Netzübergangseinrichtung IWUB ist der Aufbau der Breitband-Nutzdatenverbindung BNV zwischen den Netzübergangseinrichtungen IWUA und IWUB im Wesentlichen abgeschlossen. Über diese Breitband-Nutzdatenverbindung BNV wird dann die durch die Schmalband-Verbindungseinleitungsmeldung S-Connect eingeleitete Schmalband-Nutzdatenverbindung SNV zwischen den Vermittlungseinrichtungen PBXA und PBXB aufgebaut. Über diese Schmalband-Nutzdatenverbindung SNV können schließlich die Schmalband-Nutzdaten SDAT transparent zwischen den Vermittlungseinrichtungen PBXA und PBXB übertragen werden.

Anders als beim Stand der Technik wird die Schmalband-Verbindungsaufbaumeldung S-Setup an der Eintrittsstelle IWUA in das Breitbandnetz BN nicht bis zum vollständigen Aufbau der Breitband-Nutzdatenverbindung BNV, sondern nur bis zum Ablauf der Verzögerungszeit TD verzögert. Aufgrund der während des Breitband-Verbindungsaufbaus - d.h. vor dessen Abschluss - erfolgenden Übertragung der Schmalband-Verbindungsaufbaumeldung S-Setup über das Breitbandnetz BN, wird der Schmalband-Verbindungsaufbau mit dem Breitband-Verbindungsaufbau zeitlich parallelisiert. Durch die Verzögerung der Schmalband-Verbindungsaufbaumeldung S-Setup an der Eintrittsstelle IWUA um die voreingestellte Verzögerungszeit TD wird der Schmalband-Verbindungsaufbau mit dem Breitband-Verbindungsaufbau derart synchronisiert, dass der Aufbau der Breitband-Nutzdatenverbindung BNV mit großer Wahrscheinlichkeit abgeschlossen ist, wenn diese für die Schmalband-Nutzdatenverbindung SNV benötigt wird. Um diese Wahrscheinlichkeit noch weiter zu erhöhen, kann die Verzögerungszeit TD im laufenden Betrieb durch die Justiermittel JM nachjustiert werden.

Die Aufbauzeit der netzübergreifenden Schmalband-Nutzdatenverbindung SNV ist beim erfindungsgemäßen Verfahren im Wesentlichen durch das Maximum der Aufbauzeiten einer reinen Breitband-Nutzdatenverbindung und einer reinen Schmalband-Nutzdatenverbindung gegeben. Dieses Maximum ist im Allgemeinen nur unwesentlich länger als die Aufbauzeit einer reinen Schmalband-Nutzdatenverbindung. Beim bisherigen Stand der Technik ist die Aufbauzeit für eine netzübergreifende Schmalband-Nutzdatenverbindung dagegen durch die Summe der Aufbauzeiten einer reinen Breitband-Nutzdatenverbindung und einer reinen Schmalband-Nutzdatenverbindung gegeben. Die vorliegende Erfindung erlaubt es somit, die Aufbauzeit für netzübergreifende Schmalband-Nutzdatenverbindungen gegenüber dem Stand der Technik ohne wesentlichen Zusatzaufwand beträchtlich zu verringern. Dieser Geschwindigkeitsvorteil ist umso ausgeprägter, je mehr Transitnetze sich zwischen den Vermittlungseinrichtungen PBXB und PBXB bzw. zwischen den Schmalbandnetzen SNA und SNB befinden.

## Patentansprüche

1. Verfahren zum Aufbau einer netzübergreifenden Verbindung (SNV) mittels einer netzübergreifend zu übertragenden Verbindungsaufbaumeldung (S-Setup), wobei
a) durch Eintreffen der Verbindungsaufbaumeldung (S-Setup) an einer Eintrittsstelle (IWUA) in ein Transitnetz (BN) ein Aufbau einer Transitnetzverbindung (BNV) über das Transitnetz (BN) initiiert wird, **dadurch gekennzeichnet,**
b) **dass** eine jeweilige Aufbauzeit einer netzübergreifenden Verbindung (SNV) und einer Transitnetzverbindung (BNV) gemessen wird,
c) eine Verzögerungszeit (TD) für eine nachfolgende Verbindungsaufbaumeldung abhängig von einem Vergleich der gemessenen Aufbauzeiten eingestellt wird, und
d) **dass** die Verbindungsaufbaumeldung (S-Setup) an der Eintrittsstelle (IWUA) vor ihrer Weiterleitung über das Transitnetz (BN) um die voreingestellte Verzögerungszeit (TD) verzögert wird, die derart bemessen ist, dass der Aufbau der Transitnetzverbindung (BNV) im Wesentlichen abgeschlossen ist, wenn diese zur Verbindungsführung der durch die weitergeleitete Verbindungsaufbaumeldung (S-Setup) initiierten, netzübergreifenden Verbindung (SNV) benötigt wird.

2. Verfahren nach Anspruch 1,
**dadurch gekennzeichnet,**
**dass** die Verbindungsaufbaumeldung (S-Setup) über eine im Transitnetz (BN) aufgebaute Signalisierungstunnelverbindung (BSTV) weitergeleitet wird.

3. Verfahren nach einem der vorhergehenden Ansprüche,
**dadurch gekennzeichnet,**
**dass** die Verbindungsaufbaumeldung (S-Setup) während ihrer Verzögerung durch eine an der Eintrittsstelle angeordnete Netzübergangseinrichtung (IWUA) zwischengespeichert wird.

4. Verfahren nach Anspruch 3,
**dadurch gekennzeichnet,**
**dass** die Netzübergangseinrichtung (IWUA) während die Verbindungsaufbaumeldung (S-Setup) verzögert wird, anhand einer in dieser enthaltenen, verbindungsspezifischen Information eine oder mehrere verbindungsspezifische Einstellungen vornimmt.

5. Verfahren nach einem der vorhergehenden Ansprüche,
**dadurch gekennzeichnet,**
**dass** als netzübergreifende Verbindung (SNV) eine Schmalbandverbindung mittels einer Schmalband-Verbindungsaufbaumeldung (S-Setup) über ein Breitbandnetz (BN) als Transitnetz aufgebaut wird.

6. Netzübergangseinrichtung (IWUA) zum Aufbau einer netzübergreifenden Verbindung (SNV) über ein Transitnetz (BN), mit
a) Empfangsmitteln (SBS, PST) zum Empfangen einer über das Transitnetz (TN) weiterzuleitenden Verbindungsaufbaumeldung (S-Setup) zum Aufbau der netzübergreifenden Verbindung (SNV),
b) einer transitnetzseitigen Verbindungssteuerung zum durch Empfang der Verbindungsaufbaumeldung (S-Setup) initiierten Aufbau einer Transitnetzverbindung (BNV) über das Transitnetz (TN),
c) einem Speicher (MEM) zum Zwischenspeichern der empfangenen Verbindungsaufbaumeldung (S-Setup), **dadurch gekennzeichnet, dass**
d) eine Zeitmesseinrichtung (TM) zum Messen einer jeweiligen Aufbauzeit einer netzübergreifenden Verbindung (SNV) sowie einer Transitnetzverbindung (BNV) vorgesehen ist,
e) dass Justiermitteln (JM) zum Einstellen einer Verzögerungszeit (TD) für eine nachfolgende Verbindungsaufbaumeldung abhängig von einem Vergleich der gemessenen Aufbauzeiten vorgesehen sind, und
f) mit einem Zeitgeber (TG) zum Verzögern der Weiterleitung der zwischengespeicherten Verbindungsaufbaumeldung (S-Setup) um die voreingestellte Verzögerungszeit (TD), die derart bemessen ist, dass der Aufbau der Transitnetzverbindung (BNV) im Wesentlichen abgeschlossen ist, wenn diese zur Verbindungsführung der durch die weitergeleitete Verbindungsaufbaumeldung (S-Setup) initiierten, netzübergreifenden Verbindung (SNV) benötigt wird.

7. Netzübergangseinrichtung nach Anspruch 6,
**gekennzeichnet durch**
Einstellmittel (VST) zum Durchführen einer oder mehrerer verbindungsspezifischer Einstellungen anhand einer in der empfangenen Verbindungsaufbaumeldung (S-Setup) enthaltenen, verbindungsspezifischen Information während der Verzögerungszeit (TD) der Verbindungsaufbaumeldung (S-Setup).

## Claims

1. Method for setting up an inter-network (SNV) by means of a connection set-up message (S-Setup) to be transmitted across a network, wherein
a) by the arrival of the network set-up message (S-Setup) at an input point (IWUA) into a transit network (BN), a transit network connection (BNV) is initiated over the transit network, (BN), **characterised in that**
b) a respective set-up time of an inter-network connection (SNV) and a transit network connection (BNV) is measured,
c) a delay time (TD) for a following network set-up message is set, depending on a comparison of the measured set-up times, and
d) the network set-up message (S-Setup) at the input point (IWUA) is delayed before being forwarded over the transit network (BN) by the predetermined delay time (TD), which is measured in such a way that the set up of the transit network connection (BNV) is essentially completed when this is required for conducting the connection of the inter-network connection (SNV), initiated by the forwarded network set-up message (S-Setup).

2. Method according to claim 1 ,
**characterised in that**
the network set-up message (S-Setup) is forwarded via a signalling tunnel connection (BSTV) which is set up in the transit network (BN).

3. Method according to any one of the preceding claims,
**characterised in that**,
the network set-up message (S-Setup) is temporarily stored during its delay by means of a network transfer device (IWUA) arranged at the input point.

4. Method according to claim 3,
**characterised in that**,
while the network set-up message (S-Setup) is being delayed, the network transfer device (IWUA) undertakes one or more connection-specific settings on the basis of an item of connection-specific information contained in it.

5. Method according to any one of the preceding claims,
**characterised in that**,
as the inter-network connection (SNV) a narrow-band connection is set up by means of a narrow-band network set-up message (S-Setup) over a broadband network (BN) as the transit network.

6. Network transfer device (IWUA) for setting up an inter-network connection (SNV) via a transit network (BN), with
a) reception means (SBS, PST) for receiving a network set-up message (S-Setup) which is to be conducted via the transit network (TN) to set up the inter-network connection (SNV),
b) a transit network-side connection control for setting up a a transit network connection (BNV) via the transit network (TN) initiated by the reception of the network set-up message (S-Setup),
c) a memory (MEM) for the temporary storage of the received network set-up message (S-Setup), **characterised in that**
d) a time measuring device (TM) is provided for measuring a respective set-up time of an inter-network connection (SNV) and a transit network connection (BNV),
e) setting means (JM) are provided for setting a delay time (TD) for a following network set-up message, dependent on a comparison of the measured set-up times, and
f) a time generator (TG) for delaying the forwarding of the temporarily-stored network set-up message (S-Setup) by the predetermined delay time (TD), which is measured in such a way that the set-up of the transit network connection (BNV) is essentially completed when it is required for conducting the connection of the inter-network connection (SNV) initiated by the forwarded network set-up message (S-Setup).

7. Network transfer device according to claim 6, **characterised by** setting means (VST) for carrying out one or more connection-specific settings on the basis of an item of connection-specific information contained in the received network set-up message (S-Setup) during the delay time (TD) of the network set-up message (S-Setup).

## Revendications

1. Procédé servant à établir une connexion inter-réseau (SNV) au moyen d'un message d'établissement de connexion (S-Setup) à transmettre en inter-réseau, sachant
a) qu'un établissement d'une connexion de réseau de transit (BNV) par l'intermédiaire du réseau de transit (BN) est lancé par l'arrivée du message d'établissement de connexion (S-Setup) au niveau d'un emplacement d'entrée (IWUA) dans un réseau de transit (BN), **caractérisé en ce**
b) **qu'**une durée requise respectivement pour l'établissement d'une connexion inter-réseau (SNV) et d'une connexion de réseau de transit (BNV) est mesurée,
c) **qu'**une durée de retardement (TD) pour un message d'établissement de connexion qui suit est paramétrée en fonction d'une comparaison des durées mesurées nécessaires à l'établissement de connexions, et
d) **que** le message d'établissement de connexion (S-Setup) est retardé, au niveau de l'emplacement d'entrée (IWUA), avant son transfert par l'intermédiaire du réseau de transit (BN) de la durée de retardement (TD) préalablement paramétrée, laquelle est telle que l'établissement de la connexion de réseau de transit (BNV) est essentiellement finalisé lorsque cette dernière est requise pour piloter la connexion inter-réseau (SNV), lancée par le message d'établissement de connexion (S-Setup) transféré.

2. Procédé selon la revendication 1,
**caractérisé en ce**
**que** le message d'établissement de connexion (S-Setup) est transféré par l'intermédiaire d'une connexion de tunnel de signalisation (BSTV) établie dans le réseau de transit (BN).

3. Procédé selon l'une quelconque des revendications précédentes,
**caractérisé en ce**
**que** le message d'établissement de connexion (S-Setup) est mémorisé de manière temporaire au cours de son retardement par un dispositif de passerelle de réseau (IWUA) disposé au niveau de l'emplacement d'entrée.

4. Procédé selon la revendication 3,
**caractérisé en ce**
**que** le dispositif de passerelle de réseau (IWUA), effectue, tandis que le message d'établissement de connexion (S-Setup) est retardé, un ou plusieurs paramétrages spécifiques à la connexion à l'aide d'une information spécifique à la connexion contenue dans ledit message d'établissement de connexion.

5. Procédé selon l'une quelconque des revendications précédentes,
**caractérisé en ce**
**qu'**une connexion à bande étroite en tant que connexion inter-réseau (SNV) est établie au moyen d'un message d'établissement de connexion (S-Setup) à bande étroite par l'intermédiaire d'un réseau à bande large (BN) en tant que réseau de transit.

6. Dispositif de passerelle de réseau (IWUA) servant à établir une connexion inter-réseau (SNV) par l'intermédiaire d'un réseau de transit (BN), comprenant :
a) des moyens de réception (SBS, PST) destinés à recevoir un message d'établissement de connexion (S-Setup) à transférer par l'intermédiaire du réseau de transit (TN) afin d'établir la connexion inter-réseau (SNV) ;
b) une commande de connexion côté réseau de transit servant à l'établissement d'une connexion de réseau de transit (BNV) par l'intermédiaire du réseau de transit (TN), lancé par la réception du message d'établissement de connexion (S-Setup) ;
c) une mémoire (MEM) servant à mémoriser de manière temporaire le message d'établissement de connexion (S-Setup) reçu, **caractérisé en ce**
d) **qu'**un dispositif de mesure de durée (TM) est prévu pour mesurer une durée respective requise pour l'établissement d'une connexion inter-réseau (SNV) ainsi que d'une connexion de réseau de transit (BNV),
e) **que** des moyens d'ajustement (JM) sont prévus pour paramétrer une durée de retardement (TD) pour un message d'établissement de connexion suivant en fonction d'une comparaison entre les durées mesurées requises pour l'établissement de connexions, et
f) **qu'**un registre d'horloge (TG) est prévu pour retarder le transfert du message d'établissement de connexion (S-Setup) mémorisé de manière temporaire de la durée de retardement (TB) préalablement paramétrée, laquelle est telle que l'établissement de la connexion de réseau de transit (BNV) est essentiellement finalisé lorsque cette dernière est requise pour piloter la connexion inter-réseau (SNV) lancée par le message d'établissement de connexion (S-Setup) transféré.

7. Dispositif de passerelle de réseau selon la revendication 6,
**caractérisé par**
des moyens de paramétrage (VST) servant à mettre en oeuvre un ou plusieurs paramétrages spécifiques à la connexion à l'aide d'une information spécifique à la connexion contenue dans le message d'établissement de connexion (S-Setup) reçu lors de la durée de retardement (TD) du message d'établissement de connexion (S-Setup).
